# FASCICULE DE BREVET EUROPEEN

(11) **EP 1 493 532 B1**
(45) Date de publication et mention de la délivrance du brevet: **07.06.2006**
(21) Numéro de dépôt: 04356107.5
(22) Date de dépôt: 21.06.2004
(51) Int. Cl.: B23Q 17/22, B23G 1/16, H01H 1/00

(54) **Capteur de position d'outil a détection déportée**
Werkzeugspositionssensor mit verlagertem Sensor
Tool position sensor with indirect detection

(30) Priorité: 01.07.2003 FR 0308241
(43) Date de publication de la demande: 05.01.2005
(73) Titulaire: PRONIC, 74970 Marignier (FR)
(72) Inventeur: Pecastaing, Matthieu, 74570 Groisy (FR)
(74) Mandataire: Poncet, Jean-François

(56) Documents cités:
- DE-A- 19 729 263
- US-A- 5 615 471
- US-A- 5 967 008

## Description

La présente invention concerne les dispositifs de taraudage sous presse (voir, par exemple, DE-197 29 263-A) dans lesquels une pièce telle qu'une bande à découper et tarauder est tenue dans un outil de formage et de découpage de la bande, l'outil étant également muni d'au moins un outil de taraudage.

Ces outils à découper et tarauder sont généralement adaptés pour produire des pièces à grande cadence à partir d'une bande continue.

Lorsqu'on taraude sous presse, on cherche généralement à limiter la course des tarauds pour réaliser la course juste nécessaire afin d'obtenir un taraudage ayant la bonne dimension. En limitant la course de taraudage, on limite ainsi le temps d'usinage, et on augmente les cadences. Pour cela, on peut utiliser un capteur qui détecte la fin de l'opération de taraudage, comme cela est suggéré dans le document US 5,615,471 A.

On connaît également du document DE 197 29 263 A1 une unité de taraudage sous presse comprenant trois capteurs : un premier capteur pour détecter le recul éventuel du taraud et de son support ; un second capteur pour détecter le déplacement de la broche porte-taraud ; un troisième capteur pour détecter si le trou est libre après taraudage ou s'il reste obstrué par un taraud cassé.

Mais il arrive parfois que le taraudage ne s'effectue pas de manière complète : le taraud ne traverse pas entièrement la matière, de sorte que le taraudage est incomplet.

On a pu constater que ces défauts apparaissent de manière aléatoire dans un lot de pièces, et que ces défauts sont relativement difficiles à détecter.

Or les besoins actuels s'orientent vers un usinage fiable à 100 %, c'est-à-dire un usinage permettant de réaliser des lots de pièces taraudées de manière satisfaisante à 100 %, avec une absence totale de pièces défectueuses dans le lot.

Cela nécessite de détecter la présence d'une pièce défectueuse dès la réalisation de son usinage, afin d'éviter sa pénétration dans le lot qui contiendra, lui-même, uniquement des pièces correctes. Les dispositifs décrits dans les documents US 5,615,471 A et DE 197 29 263 A1 ne permettent pas une telle détection fiable de pièce défectueuse.

Jusqu'à présent, la détection d'un taraudage correct a été réalisée en vérifiant, à chaque cycle, la position basse du taraud, pour s'assurer que le taraud a effectué une course suffisante pour traverser de manière certaine la pièce.

On place ainsi un détecteur de position de taraud directement sous l'outil de taraudage, entièrement dans la semelle de l'outil, le détecteur envoyant des signaux électriques par une ligne jusqu'à un dispositif de commande.

Un défaut grave de ces dispositifs de détection connus est qu'il faut adapter à chaque fois un dispositif approprié au-dessous de l'outil de taraudage, et ce dispositif doit être conforme à la course normale du taraud. Les réglages de course sont difficiles, voire impossibles car le détecteur n'est pas accessible.

Un autre inconvénient est que les dispositifs de détection sont encombrants, c'est-à-dire qu'ils occupent une place non négligeable au-dessous de l'outil de taraudage, de sorte que les détecteurs ne peuvent pas être placés de manière très rapprochée les uns des autres lorsqu'il s'agit de réaliser plusieurs taraudages parallèles sur un même produit. Il est ainsi impossible de réaliser des taraudages rapprochés, à cause de l'encombrement nécessaire du dispositif de détection placé dans le support de presse.

En outre, les dispositifs connus sont sensibles à la présence de copeaux de taraudage, ce qui affecte la fiabilité des détections.

Le problème proposé par la présente invention est de concevoir une nouvelle structure de capteur de position de taraud pour taraudage sous presse, qui permette une utilisation dans une large gamme de taraudages, et qui permette le réglage de la détection selon la position finale désirée du taraud.

Un autre objet de l'invention est de concevoir une telle structure de capteur de position de taraud qui soit particulièrement fiable, et précis, afin de détecter avec certitude les pièces défectueuses et de les extraire du lot dès leur fabrication.

Un autre objet de l'invention est de concevoir un tel capteur de position de taraud qui soit particulièrement peu encombrant, et facile à intégrer dans une semelle d'outil en dessous de l'outil de taraudage, de façon à permettre la réalisation de taraudages rapprochés.

Pour atteindre ces buts ainsi que d'autres, l'invention prévoit un capteur de position de taraud pour taraudage sous presse, comprenant :
- un palpeur adapté pour être intégré dans une semelle d'outil de découpage et pour être sollicité par l'extrémité du taraud en fin de taraudage,
- un dispositif multiplicateur de déplacement, sollicité par le palpeur et adapté pour amplifier le déplacement du palpeur,
- un câble de transmission, couplé par une première extrémité au dispositif multiplicateur de déplacement, et dont une seconde extrémité est déportée à l'écart du palpeur,
- un moyen de détection de position, adapté pour détecter la position de la seconde extrémité du câble de transmission.

Cette combinaison de caractéristiques permet, grâce au câble de transmission, de déporter le moyen de détection de position à l'écart de la zone occupée par le taraud, tout en évitant les erreurs de mesure ou de détection éventuelles introduites par les jeux de transmission mécanique nécessaires depuis le taraud jusqu'au moyen de détection de position, et en facilitant considérablement la possibilité d'intégration du dispositif dans la zone de semelle d'outil au-dessous de l'outil de taraudage.

L'invention propose ainsi une solution peu onéreuse, avec un détecteur dont une portion est placée dans la cavité inférieure prévue sous le taraud dans la semelle de l'outil, pour palper le taraud afin de repérer avec précision sa position de point mort bas, et pour transmettre à distance l'information de repérage jusqu'à l'extérieur du support de l'outil d'une façon qui libère au mieux la place sous le taraud, qui permet l'intégration rapprochée de plusieurs tarauds, et qui permet les réglages de détection.

Le câble de transmission peut être nu, à condition de travailler en traction et de rester tendu et de coulisser entre deux supports d'extrémités solidaires du bâti du dispositif.

De préférence, le câble de transmission coulisse dans une gaine elle-même solidaire du bâti du dispositif.

Selon un mode de réalisation avantageux de l'invention, le dispositif multiplicateur de déplacement comprend un levier multiplicateur ayant un bras amont plus court que le bras aval.

De préférence, le levier multiplicateur est coudé, adapté pour disposer, en position d'attente, son bras amont en orientation horizontale appropriée pour détecter le mouvement vertical d'un taraud, et adapté pour disposer, dans ladite position d'attente, au moins une partie de son bras aval en orientation verticale appropriée pour assurer un départ horizontal du câble de transmission. Cette disposition facilite l'intégration du dispositif dans le support de presse sous la zone occupée par l'outil de taraudage.

Selon une réalisation, le palpeur comprend un poussoir à translation verticale fonctionnellement lié au bras amont du levier multiplicateur par une goupille transversale engagée en translation longitudinale le long du bras amont du levier multiplicateur.

Selon une autre réalisation, le palpeur comprend un levier inverseur orienté en direction générale horizontale et pivotant autour d'un axe médian horizontal, avec son extrémité amont sollicitée par le taraud en fin de course de taraudage, et avec son extrémité aval couplée au levier multiplicateur.

Selon une troisième réalisation, le palpeur comprend un poussoir vertical solidaire du bras amont lui-même disposé en orientation sensiblement horizontale, et placé en ligne avec la trajectoire du taraud à détecter.

De préférence, le levier multiplicateur est sollicité par un ressort de rappel en position d'attente. Le ressort constitue le moyen de rappel en position d'attente à la fois du palpeur, du câble de transmission, et du moyen de détection de position.

Un tel capteur de position défini ci-dessus peut être intégré dans un outil de découpage à taraudage intégré. Dans une telle réalisation, l'outil de découpage à taraudage intégré comprend deux semelles, un support de bande soutenant la bande à découper, des outils pour découper la bande, et au moins un outil de taraudage portant un taraud. L'outil comprend au moins un capteur de position à détecteur déporté tel que défini ci-dessus, avec le palpeur et le dispositif multiplicateur de déplacement qui sont intégrés dans la semelle inférieure de l'outil dans la zone au-dessous de l'outil de taraudage.

De préférence, le câble de transmission peut être adapté pour traverser la semelle inférieure de l'outil depuis la zone au-dessous de l'outil de taraudage jusqu'à l'extérieur de la semelle inférieure de l'outil, le moyen de détection de position étant alors placé à l'extérieur de la semelle inférieure de l'outil, et étant ainsi directement accessible par l'utilisateur.

D'autres objets, caractéristiques et avantages de la présente invention ressortiront de la description suivante de modes de réalisation particuliers, faite en relation avec les figures jointes, parmi lesquelles:
- la figure 1 est une vue de côté schématique en coupe d'un outil de découpage à taraudage intégré muni d'un capteur de position de taraud selon un premier mode de réalisation de l'invention, en position d'attente ;
- la figure 2 est une vue schématique de dessus de l'ensemble capteur de position de taraud de la figure 1, montrant la ligne de coupe A-A des vues de côté ;
- la figure 3 est une vue de côté en coupe de l'outil de découpage à taraudage intégré de la figure 1, en position de détection de point mort bas du taraud ;
- la figure 4 est une vue de côté en coupe d'un outil de découpage à taraudage intégré muni d'un capteur de position de taraud selon un second mode de réalisation de la présente invention, en position d'attente ;
- la figure 5 illustre en coupe l'outil de la figure 4, en position de détection de point mort bas du taraud ;
- la figure 6 est une vue de côté en coupe d'un outil de découpage à taraudage intégré muni d'un capteur de position de taraud selon un troisième mode de réalisation de la présente invention, en position d'attente ; et
- la figure 7 est une vue de côté en coupe illustrant l'outil de la figure 6 en position de détection de point mort bas du taraud.

Dans les modes de réalisation illustrés sur les figures, le capteur de position de taraud selon l'invention est figuré dans sa position d'utilisation à l'intérieur d'un outil de découpage à taraudage intégré.

Cet outil de découpage à taraudage intégré comprend une semelle inférieure 1 et une semelle supérieure 8, supportant l'ensemble des autres éléments.

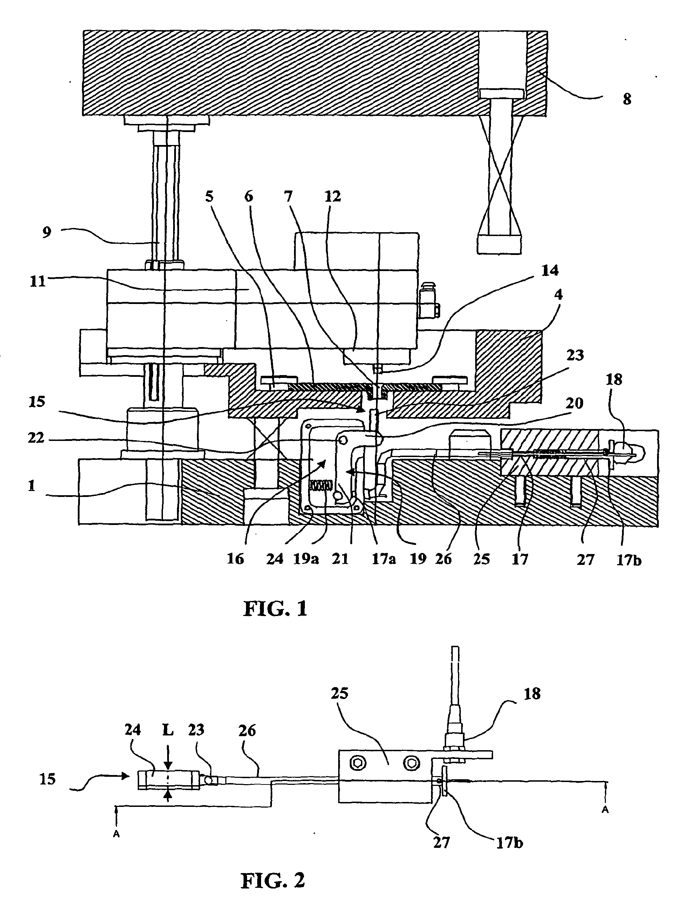

L'outil de découpage à taraudage intégré comprend plusieurs postes portant des outils de découpe et de formage non représentés, et un poste comportant l'outil de taraudage 11, représenté sur les figures 1, 3, 4, 5, 6 et 7.

La matière mise en oeuvre par cet outil se présente sous forme d'une bande 6, défilant horizontalement dans l'outil, sur un support de bande 4, qui comporte des guides 5 pour son maintien. La bande 6 comporte au moins un trou 7 traversant qu'il faut tarauder. Le trou peut avoir été réalisé par exemple par formage dans un poste précédent de l'outil.

L'outil ainsi constitué est monté sur une presse. La semelle inférieure 1 repose sur la table de la presse, et la semelle supérieure 8 est fixée au coulisseau de la presse, ce dernier lui conférant un mouvement vertical.

Au poste de taraudage, ce mouvement vertical est repris par un dispositif vis/écrou 9 qui génère un mouvement de rotation. Le mouvement de rotation ainsi obtenu est repris par l'outil de taraudage 11, qui transmet à une broche porte-taraud 12 un mouvement helicoïdal. La broche porte-taraud 12 est conformée pour porter un taraud 14, situé face au trou 7 à tarauder.

En position d'attente illustrée sur la figure 1, la semelle supérieure 8 est relevée et le taraud 14 est à l'écart de la bande 6.

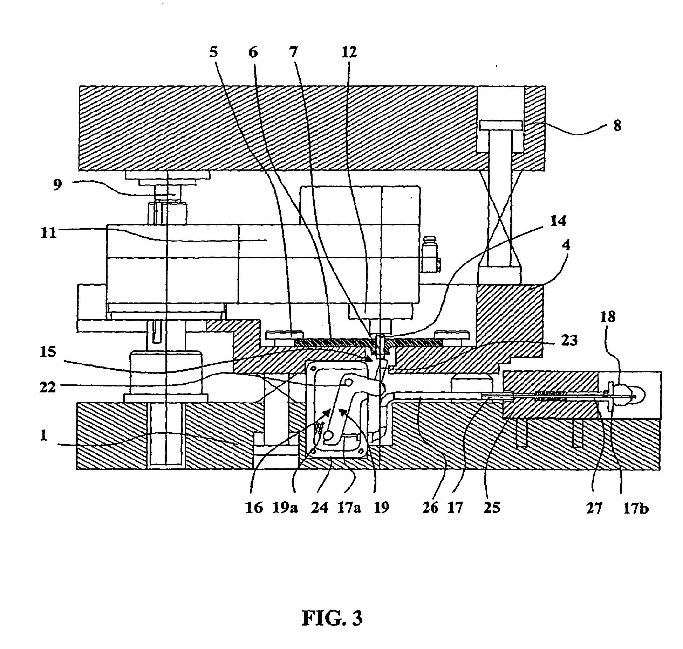

En position de point mort bas du taraud, illustrée sur la figure 3, la semelle supérieure 8 est abaissée, et la broche porte-taraud 12 a effectué un mouvement hélicoïdal entraînant dans ce même mouvement le taraud 14 qui traverse le trou 7 de la pièce 6. L'extrémité distale du taraud 14 dépasse légèrement sous la bande 6.

Dans certains outils, le support de bande 4 peut également être animé d'un mouvement alternatif de translation verticale pour accompagner les opérations de découpe et de formage effectuées sur les autres postes de l'outil. Le poste de taraudage est alors adapté à ce mouvement du support de bande 4. Ainsi, en position d'attente sur la figure 1, on voit que le support de bande 4 est relevé à l'écart de la semelle inférieure 1, tandis qu'au point mort bas illustré sur la figure 3, le support de bande 4 est abaissé plus près de la semelle inférieure 1. Ce mouvement vertical du support de bande 4 n'affecte pas la détection du point mort bas du taraud 14 par les moyens de l'invention.

Dans tous les modes de réalisation, le capteur de position de taraud comprend essentiellement un palpeur 15, un dispositif multiplicateur de déplacement 16, un câble de transmission 17, et un moyen de détection de position 18.

Egalement, dans tous les modes de réalisation illustrés sur les figures, le dispositif multiplicateur de déplacement 16 comprend un levier multiplicateur 19 ayant un bras amont 20 plus court que le bras aval 21, et monté pivotant autour d'un axe transversal horizontal intermédiaire 22 à la jonction entre le bras amont 20 et le bras aval 21. On admettra toutefois que des structures de leviers multiplicateurs qui sont articulés à une extrémité pourraient également être utilisées.

Dans la réalisation illustrée sur les figures 1 à 3, le levier multiplicateur 19 est coudé, adapté pour disposer, en position d'attente illustrée sur la figure 1, son bras amont 20 en orientation horizontale, et son bras aval 21 en orientation verticale. Un ressort 19a sollicite le levier multiplicateur 19 vers sa position d'attente illustrée sur la figure 1, avec le bras aval 21 en position verticale et le bras amont 20 en position horizontale. Dans cette réalisation, le palpeur 15 comprend un poussoir vertical 23 solidaire du bras amont 20 et placé en ligne avec la trajectoire du taraud 14 à détecter.

Le palpeur 15, intégré dans la semelle inférieure 1 de l'outil et dans le support de bande 4, est adapté pour être sollicité par l'extrémité distale du taraud 14 en fin de taraudage.

Le dispositif multiplicateur de déplacement 16 est sollicité par le palpeur ou poussoir vertical 23 pour pivoter autour de son axe transversal horizontal intermédiaire 22 et pour amplifier le déplacement du palpeur ou poussoir vertical 23 grâce à la différence de longueur du bras amont 20 et du bras aval 21.

Le câble de transmission 17 est couplé par sa première extrémité 17a au dispositif multiplicateur de déplacement 16. En pratique, la première extrémité 17a du câble de transmission 17 est fixée à l'extrémité distale du bras aval 21. Sa seconde extrémité 17b, déportée à l'écart du palpeur 15, est détectée par le moyen de détection de position 18.

Le levier multiplicateur 19 avec son ressort 19a sont montés dans un corps de palpeur 24 fixé dans la semelle inférieure 1 de l'outil.

Le moyen de détection de position 18 est déporté vers l'extérieur, à l'écart de la zone du taraud 14 grâce au câble de transmission 17, et est solidaire d'un corps de détecteur 25 lui-même fixé à la semelle inférieure 1 de l'outil.

Le câble de transmission 17 est avantageusement monté à coulissement dans une gaine 26 qui est elle-même fixe par rapport à la semelle inférieure 1 de l'outil.

Le moyen de détection de position 18 peut par exemple être un capteur de proximité, sensible à la position d'une pièce d'extrémité 27 montée coulissante dans le corps de détecteur 25 et constituant la seconde extrémité 17b du câble de transmission 17.

En fin de course de taraudage, le taraud 14 traverse le trou 7 et son extrémité vient repousser le poussoir vertical 23 qui fait alors basculer le levier multiplicateur 19 vers la position inclinée illustrée sur la figure 3, lequel levier multiplicateur 19 tire le câble de transmission 17 dont la seconde extrémité 17b est alors détectée par le moyen de détection de position 18 qui confirme la présence du taraud 14 au point mort, en confirmant la bonne qualité du taraudage effectué.

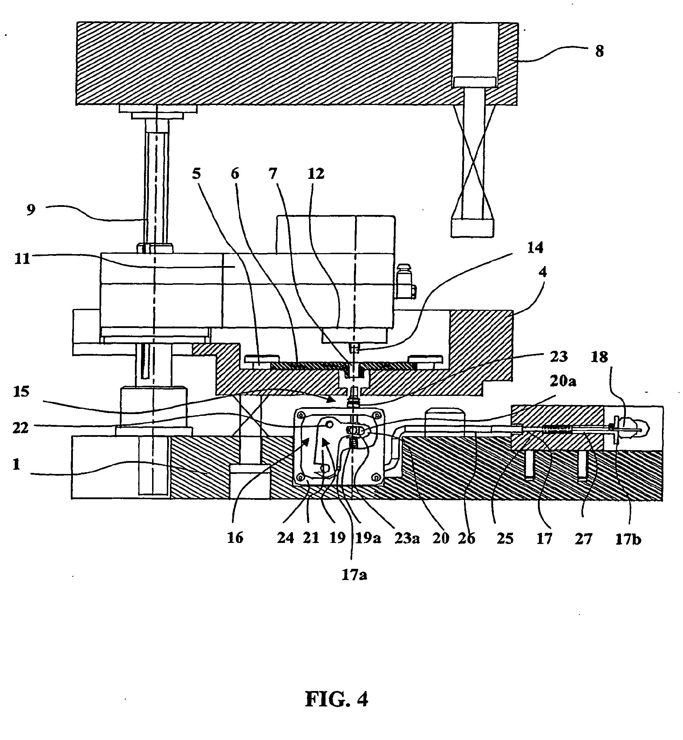

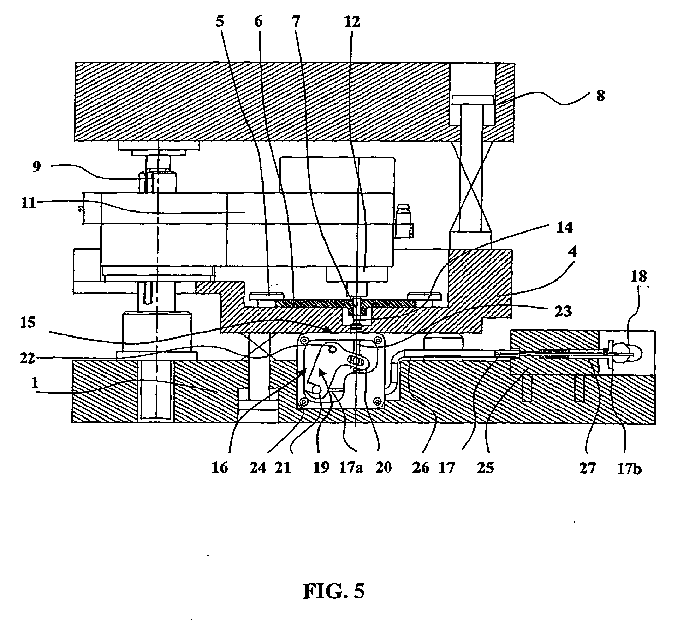

Dans la réalisation illustrée sur les figures 4 et 5, on retrouve les éléments essentiels de l'outil de découpage à taraudage intégré des figures 1 à 3, et les éléments essentiels sont repérés par les mêmes références numériques.

On retrouve également les moyens essentiels du capteur de position de taraud, et en particulier le palpeur 15, le dispositif multiplicateur de déplacement 16, le câble de transmission 17, et le moyen de détection de position 18.

Dans ce second mode de réalisation, seuls sont modifiés le palpeur 15 et le dispositif multiplicateur de déplacement 16.

Dans ce cas, on retrouve également un corps de palpeur 24 supportant un poussoir vertical 23 constituant le palpeur lui-même et associé à un levier multiplicateur 19 monté à pivotement autour d'un axe transversal horizontal intermédiaire 22, le levier multiplicateur 19 ayant deux bras perpendiculaires, à savoir un bras amont 20 généralement horizontal, et un bras aval 21 généralement vertical.

Le poussoir vertical 23 est monté à coulissement vertical en alignement avec la course verticale du taraud 14, et est fonctionnellement lié au bras amont 20 par une goupille transversale 23a du poussoir vertical 23, la goupille transversale 23a étant engagée dans une lumière oblongue 20a horizontale du bras amont 20. De la sorte, le mouvement de translation verticale du poussoir vertical 23 est transformé en un mouvement de rotation du levier multiplicateur 19 qui sollicite alors en translation le câble de transmission 17 dont les mouvements sont détectés par le moyen de détection de position 18. Ainsi, les figures 4 et 5 illustrent respectivement la position d'attente et la position de point mort bas du taraud 14.

On notera que, dans cette réalisation, le ressort 19a de rappel du détecteur en position d'attente est monté sur le poussoir vertical 23.

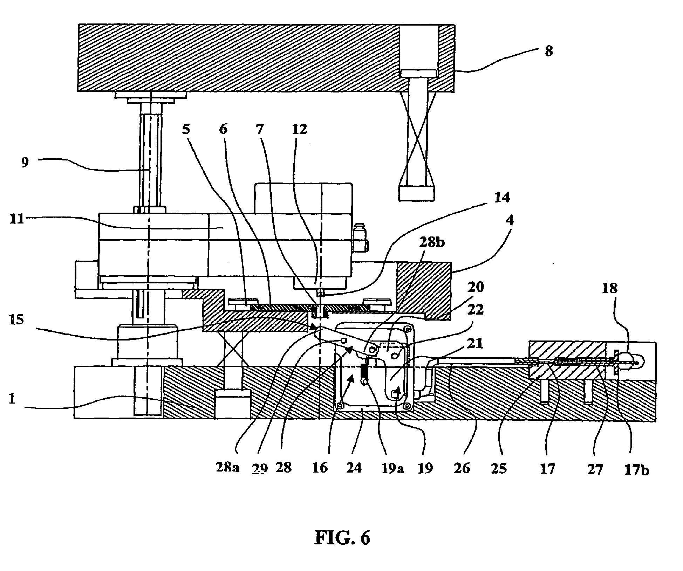

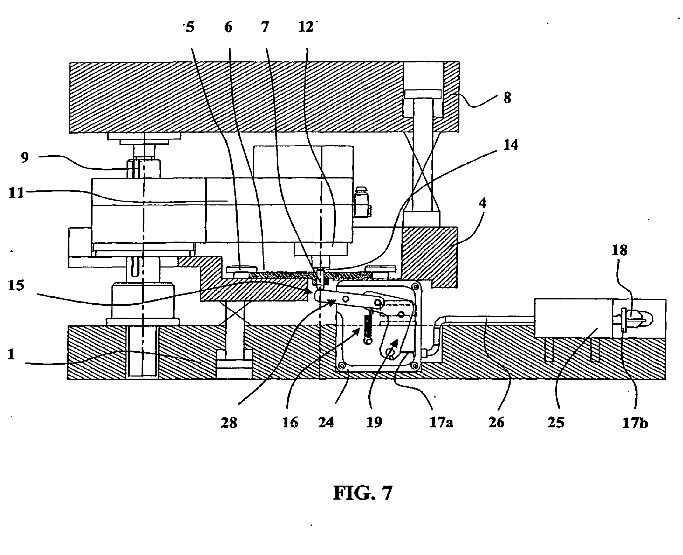

Dans la réalisation illustrée sur les figures 6 et 7, on retrouve également les moyens essentiels des modes de réalisation précédents, et notamment le corps de palpeur 24 portant le palpeur 15, le levier multiplicateur 19, et le ressort 19a de rappel, ainsi qu'un câble de transmission 17 et un moyen de détection de position 18.

Dans cette réalisation, le palpeur 15 comprend un levier inverseur 28 orienté en direction générale horizontale et pivotant autour d'un axe médian 29 horizontal. L'extrémité amont 28a est sollicitée par le taraud 14 en fin de course de taraudage, tandis que son extrémité aval 28b est couplée au levier multiplicateur 19 dans la zone d'extrémité amont de son bras amont 20. Le levier multiplicateur 19 a une position inversée par rapport à la position sur les figures 1 à 4.

Comme on le voit sur la figure 2, le corps de palpeur 24, qui contient le palpeur 15 et le dispositif multiplicateur de déplacement 16, occupe une largeur L réduite sous la zone du taraud 14. Cette largeur L est réduite grâce au fait que le levier multiplicateur pivote autour d'un axe 22 horizontal et constitue lui-même une structure à faible largeur. Il en est de même du levier inverseur 28. De la sorte, il est possible de placer des corps de palpeur 24 à proximité les uns des autres de façon à détecter la position de tarauds qui sont eux-mêmes proches les uns des autres.

Egalement, il est facile d'intégrer dans une semelle inférieure 1 de l'outil le sous-ensemble constitué par le corps de palpeur 24 et les éléments qu'il contient, grâce à la possibilité de déporter vers l'extérieur de la semelle inférieure 1 les autres organes tels que le moyen de détection de position 18.

Grâce à cette structure selon l'invention, il est possible de contrôler efficacement la bonne réalisation du taraudage à chaque opération de taraudage. De la sorte, en cas de détection d'un taraudage incomplet, il est possible de rejeter la pièce dès l'étape de fabrication, de sorte que le lot de pièces ne contient que des pièces satisfaisantes.

La présente invention n'est pas limitée aux modes de réalisation qui ont été explicitement décrits, mais elle en inclut les diverses variantes et généralisations contenues dans le domaine des revendications ci-après.

## Revendications

1. Capteur de position de taraud pour taraudage sous presse, comprenant :
- un palpeur (15) adapté pour être intégré dans une semelle d'outil de découpage (1) et pour être sollicité par l'extrémité du taraud (14) en fin de taraudage, et **caractérisé par**
- un dispositif multiplicateur de déplacement (16), sollicité par le palpeur (15) et adapté pour amplifier le déplacement du palpeur (15),
- un câble de transmission (17), couplé par une première extrémité (17a) au dispositif multiplicateur de déplacement (16), et dont une seconde extrémité (17b) est déportée à l'écart du palpeur (15),
- un moyen de détection de position (18), adapté pour détecter la position de la seconde extrémité (17b) du câble de transmission (17).

2. Capteur de position de taraud selon la revendication 1, **caractérisé en ce que** le câble de transmission (17) coulisse dans une gaine (26).

3. Capteur de position de taraud selon l'une des revendications 1 ou 2, **caractérisé en ce que** le dispositif multiplicateur de déplacement (16) comprend un levier multiplicateur (19) ayant un bras amont (20) plus court que le bras aval (21).

4. Capteur de position de taraud selon la revendication 3, **caractérisé en ce que** le levier multiplicateur (19) est coudé, adapté pour disposer, en position d'attente, son bras amont (20) en orientation horizontale appropriée pour détecter le mouvement vertical d'un taraud (14), et adapté pour disposer, dans ladite position d'attente, au moins une partie de son bras aval (21) en orientation verticale appropriée pour assurer un départ horizontal du câble de transmission (17).

5. Capteur de position de taraud selon l'une des revendications 3 ou 4, **caractérisé en ce que** le palpeur (15) comprend un poussoir (23) à translation verticale fonctionnellement lié au bras amont (20) du levier multiplicateur (19) par une goupille transversale (23a) engagée en translation longitudinale le long du bras amont (20) du levier multiplicateur (19).

6. Capteur de position de taraud selon l'une des revendications 3 ou 4, **caractérisé en ce que** le palpeur (15) comprend un levier inverseur (28) orienté en direction générale horizontale et pivotant autour d'un axe médian (29) horizontal, avec son extrémité amont (28a) sollicitée par le taraud (14) en fin de course de taraudage, et avec son extrémité aval (28b) couplée au levier multiplicateur (19).

7. Capteur de position de taraud selon l'une des revendications 3 ou 4, **caractérisé en ce que** le palpeur (15) comprend un poussoir vertical (23) solidaire du bras amont (20) lui-même disposé en orientation sensiblement horizontale, et placé en ligne avec la trajectoire du taraud (14) à détecter.

8. Capteur de position de taraud selon l'une quelconque des revendications 3 à 7, **caractérisé en ce que** le levier multiplicateur (19) est sollicité par un ressort (19a) de rappel en position d'attente

9. Outil de découpage à taraudage intégré, ayant une semelle inférieure (1), une semelle supérieure (8), un support de bande (4) soutenant une bande (6) à découper, des outils pour découper la bande (6), et au moins un outil de taraudage (11) portant un taraud (14), **caractérisé en ce qu'**il comprend au moins un capteur de position à détecteur déporté selon l'une quelconque des revendications 1 à 8, avec le palpeur (15) et le dispositif multiplicateur de déplacement (16) qui sont intégrés dans la semelle inférieure (1) de l'outil dans la zone au-dessous de l'outil de taraudage (11).

10. Outil de découpage à taraudage intégré selon la revendication 9, **caractérisé en ce que** le câble de transmission (17) est adapté pour traverser la semelle inférieure (1) de l'outil depuis la zone au-dessous de l'outil de taraudage (11) jusqu'à l'extérieur de la semelle inférieure (1) de l'outil et le moyen de détection de position (18) est placé à l'extérieur de la semelle inférieure (1) de l'outil.

## Claims

1. Tap position sensor for tapping on a press, comprising :
- a feeler (15) adapted to be integrated into a platen of a cutting tool (1) and to be loaded by the end of the tap (14) at the end of tapping, **characterized by** :
- a displacement multiplier device (16), loaded by the feeler (15) and adapted to amplify the displacement of the feeler (15),
- a transmission cable (17), coupled by a first end (17a) to the displacement multiplier device (16), and whose second end (17b) is offset away from the feeler (15),
- position detection means (18) adapted to detect the position of the second end (17b) of the transmission cable (17).

2. Tap position sensor according to claim 1, **characterized in that** the transmission cable (17) slides in a sheath (26).

3. Tap position sensor according to either claim 1 or claim 2, **characterized in that** the displacement multiplier device (16) comprises a multiplier lever (19) having an upstream arm (20) shorter than the downstream arm (21).

4. Tap position sensor according to claim 3, **characterized in that** the multiplier lever (19) is cranked and adapted to have a waiting position in which its upstream arm (20) is in a horizontal orientation appropriate to detect vertical movement of a tap (14) and adapted to have a waiting position in which at least a portion of its downstream arm (21) is in a vertical orientation appropriate to horizontal departure of the transmission cable (17).

5. Tap position sensor according to either claim 3 or claim 4, **characterized in that** the feeler (15) comprises a plunger (23) adapted to move in vertical translation and functionally connected to the upstream arm (20) of the multiplier lever (19) by a transverse pin (23a) engaged with and adapted to move in longitudinal translation along the upstream arm (20) of the multiplier lever (19).

6. Tap position sensor according to either claim 3 or claim 4, **characterized in that** the feeler (15) comprises a generally horizontal reversing lever (28) pivoting about a horizontal median shaft (29) and whose upstream end (28a) is loaded by the tap (14) at the end of the tapping stroke and whose downstream end (28b) is coupled to the multiplier lever (19).

7. Tap position sensor according to either claim 3 or claim 4, **characterized in that** the feeler (15) comprises a vertical plunger (23), fastened to the upstream arm (20) which is substantially horizontal, and in line with the trajectory of the tap (14) to be detected.

8. Tap position sensor according to any of claims 3 to 7, **characterized in that** the multiplier lever (19) is spring-loaded into a waiting position by a spring (19a).

9. Integrated cutting and tapping tool, having a bottom platen (1), a top platen (8), a strip support (4) for supporting a strip (6) to be cut, tools for cutting the strip (6), and at least one tapping tool (11) carrying a tap (14), **characterized in that** it comprises at least one position sensor comprising a remote detector according to any of claims 1 to 8, with the feeler (15) and the displacement multiplier device (16) integrated into the bottom platen (1) of the tool in the area below the tapping tool (11).

10. Integrated cutting and tapping tool according to claim 9, **characterized in that** the transmission cable (17) is adapted to pass through the bottom platen (1) of the tool from the area below the tapping tool (11) to the exterior of the bottom platen (1) of the tool and the position detection means (18) are placed outside the bottom platen (1) of the tool.

## Patentansprüche

1. Positionssensor für Gewindebohrer zum Gewindeschneiden unter Druck mit:
- einem Fühler (15), der zur Integration in eine Platte (1) eines Schneidwerkzeuges und zur Belastung durch ein Ende des Gewindebohrers (14) bei Beendigung des Gewindeschneidens ausgebildet ist, und **gekennzeichnet durch**
- eine Verschiebungs-Multiplikationseinrichtung (16), die **durch** den Fühler (15) belastet ist und zum Vergrößern der Verschiebung des Fühlers (15) ausgebildet ist,
- ein Übertragungskabel (17), das mit einem ersten Ende (17a) an die Verschiebungs-Multiplikationseinrichtung (16) gekoppelt ist und dessen zweites Ende (17b) im Abstand zu dem Fühler (15) angeordnet ist,
- ein Positionserfassungsmittel (18), das zum Erfassen der Position des zweiten Endes (17b) des Übertragungskabels (17) ausgebildet ist.

2. Positionssensor für Gewindebohrer nach Anspruch 1, **dadurch gekennzeichnet, daß** das Übertragungskabel (17) in einer Führung (26) gleitet.

3. Positionssensor für Gewindebohrer nach einem der Ansprüche 1 oder 2, **dadurch gekennzeichnet, daß** die Verschiebungs-Multiplikationseinrichtung (16) einen Multiplikationshebel (19) aufweist, der einen aufwärts gerichteten Arm (20) hat, der kürzer ist als der abwärts gerichtete Arm (21).

4. Positionssensor für Gewindebohrer nach Anspruch 3, **dadurch gekennzeichnet, daß** der Multiplikationshebel (19) gebogen ist und so ausgebildet ist, daß er in einer Warteposition seinen aufwärts gerichtete Arm (20) in horizontaler Ausrichtung verschiebt, die geeignet ist, die vertikale Bewegung eines Gewindebohrers (14) zu erfassen und ausgebildet ist, um in der genannten Warteposition mindestens einen Teil seines abwärts gerichteten Armes (21) in vertikaler Orientierung zu verschieben, was geeignet ist, eine horizontale Verschiebung des Übertragungskabels (17) sicherzustellen.

5. Positionssensor für Gewindebohrer nach einem der Ansprüche 3 oder 4, **dadurch gekennzeichnet, daß** der Fühler (15) einen Stößel (23) aufweist, der zur vertikalen Bewegung und funktionellen Verbindung mit dem aufwärts gerichteten Arm (20) des Multiplikationshebels (19) mittels eines quer verlaufenden Stiftes (23a) ausgebildet ist, der bei Längsbewegung längs des aufwärts gerichteten Armes (20) des Multiplikationshebels (19) eingreift.

6. Positionssensor für Gewindebohrer nach einem der Ansprüche 3 oder 4, **dadurch gekennzeichnet, daß** der Fühler (15) einen Umkehrhebel (28) aufweist, der in im wesentlichen horizontaler Richtung ausgerichtet ist und um eine horizontale Mittelachse (29) schwenkt, wobei sein aufwärts gerichtetes Ende (28a) bei Beendigung des Gewindeschneidvorganges von dem Gewindebohrer (14) belastet ist und wobei sein abwärts gerichtetes Ende (28b) mit dem Multiplikationshebel (19) gekoppelt ist.

7. Positionssensor für Gewindebohrer nach einem der Ansprüche 3 oder 4, **dadurch gekennzeichnet, daß** der Fühler (15) einen vertikalen Stößel (23) aufweist, der mit dem aufwärts gerichteten Arm (20) verbunden ist, der seinerseits in einer im wesentlichen horizontalen Ausrichtung angeordnet ist und mit der Trajectorie des Gewindebohrers (14), der sensiert werden soll, ausgerichtet ist.

8. Positionssensor für Gewindebohrer nach irgendeinem der Ansprüche 3 bis 7, **dadurch gekennzeichnet, daß** der Multiplikationshebel (19) mittels einer Rückstellfeder (19a) in die Wartestellung vorgespannt ist.

9. Integriertes Gewindeschneidwerkzeug mit einer unteren Platte (1), einer oberen Platte (8), einer Streifenhalterung (4), die einen zu schneidenden Streifen (6) hält, Werkzeugen zum Schneiden des Streifens (6) und mindestens einem Gewindeschneidwerkzeug (11), das einen Gewindebohrer (14) hält, **dadurch gekennzeichnet, daß** es mindestens einen Positionssensor mit verlagertem Detektor nach irgendeinem der Ansprüche 1 bis 8 enthält, wobei der Fühler (15) und die Verschiebungs-Multiplikationseinrichtung (16) in die untere Platte (1) des Werkzeuges in der Zone unterhalb des Gewindeschneidwerkzeuges (11) integriert sind.

10. Integriertes Gewindeschneidwerkzeug nach Anspruch 9, **dadurch gekennzeichnet, daß** das Übertragungskabel (17) so ausgebildet ist, daß es die untere Platte (1) des Werkzeuges von der Zone unterhalb des Gewindeschneidwerkzeuges (11) bis zur Außenseite der unteren Platte (1) des Werkzeuges durchquert und daß das Positionserfassungsmittel (18) außerhalb der unteren Platte (1) des Werkzeuges angeordnet ist.
